# EUROPÄISCHE PATENTSCHRIFT

(11) **EP 3 353 428 B1**
(45) Veröffentlichungstag und Bekanntmachung des Hinweises auf die Patenterteilung: **12.06.2019**
(21) Anmeldenummer: 16735606.2
(22) Anmeldetag: 28.06.2016
(51) Int. Cl.: F16B 12/20

(54) **SPREIZMUFFEN-UMSPRITZTER VERBINDUNGSSPREIZBOLZEN**
CONNECTING EXPANSION BOLTS OVER-MOULDED WITH EXPANSION SLEEVES
BOULON EXPANSIBLE ENROBÉ PAR MOULAGE PAR INJECTION D'UN MANCHON EXPANSIBLE

(30) Priorität: 23.09.2015 DE 202015105030 U
(43) Veröffentlichungstag der Anmeldung: 01.08.2018
(73) Patentinhaber: Häfele Berlin GmbH & Co KG, 12307 Berlin (DE)
(72) Erfinder: WALZ, Rüdiger, 72149 Neustetten (DE); VON WILCKE, Michael, 16547 Birkenwerder (DE)
(74) Vertreter: Kohler Schmid Möbus Patentanwälte
(86) Internationale Anmeldenummer: PCT/EP2016/064969
(87) Internationale Veröffentlichungsnummer: WO 2017/050446

(56) Entgegenhaltungen:
- EP-A1- 1 982 818
- EP-A2- 0 940 587
- DE-T2- 60 218 621

## Beschreibung

Die Erfindung betrifft einen Spreizmuffen-umspritzten Verbindungsspreizbolzen mit einem Bolzenkopf am einen Bolzenende und einem sich in Richtung auf den Bolzenkopf verjüngenden Bolzenkonus am anderen Bolzenende, wobei der Bolzenkonus und ein sich daran anschließender Bolzenschaftabschnitt mit einer Kunststoff-Spreizmuffe umspritzt sind, deren den Bolzenkonus umgebendes Muffenende durch endseitig offene Schlitze in mehrere abspreizbare Muffensegmente unterteilt ist.

Ein derartiger Spreizmuffen-umspritzter Verbindungsspreizbolzen ist beispielsweise durch die DE 602 18 621 T2 bekannt geworden.

Solche Spreizmuffen-umspritzte Verbindungsspreizbolzen sind bekannt und werden beispielsweise bei einer Eckverbindung zweier Holzfaserplatten eingesetzt. Bei den bekannten Spreizmuffen-umspritzten Verbindungsspreizbolzen ist das den Bolzenkonus umgebende Muffenende durch zwei endseitig offene Schlitze in zwei abspreizbare Muffensegmente unterteilt. Die beiden Schlitze verlaufen auf ihrer gesamten Länge, also auch auf dem Bolzenkonus parallel zur Bolzenachse. Da sich die beiden Muffensegmente beim Anzug der Verbindung nur in zwei Richtungen aufspreizen, ist die Haltekraft bei Zugbelastung der Eckverbindung nicht optimal.

Ein Spreizmuffen-umspritzter Verbindungsspreizbolzen, bei dem das abspreizbare Muffenende durch achsparallele Schlitze in drei oder vier Muffensegmente unterteilt ist, ist zwar prinzipiell möglich, allerdings nur mit deutlich erhöhtem Aufwand, da hierfür ein Spritzgusswerkzeug mit Schieber erforderlich ist.

Der aus der DE 602 18 621 T2 bekannte Spreizmuffen-umspritzte Verbindungsspreizbolzen dient zum Zusammenfügen zweier Bauteile und umfasst ein längliches Dübelelement und ein sich um das Dübelelement erstreckendes Hülsenelement. Das Hülsenelement weist an einem ersten Ende einen spreizbaren Abschnitt und das Dübelelement einen Spreizbereich auf, der bei einer Längsbewegung des Dübelelements relativ zum Hülsenelement in eine erste Richtung mit dem spreizbaren Abschnitt in Eingriff bringbar ist und eine Bewegung des spreizbaren Abschnitts seitwärts nach außen verursacht. Dabei weist der Spreizbereich einen sich in der ersten Richtung verjüngenden Abschnitt und das Hülsenelement einen komplementären Verjüngungsabschnitt auf, wodurch es bei einer relativen Bewegung des Dübelelements in die erste Richtung über die Länge des spreizbaren Abschnitts betrachtet zu unterschiedlich starken Bewegungen des spreizbaren Abschnitts seitwärts nach außen kommt.

Es sind auch klappbare Kunststoff-Spreizmuffen mit drei oder vier Muffensegmenten bekannt, die allerdings separat gefertigt und anschließend aufwändig von Hand um den Metallbolzen geschlossen ("umclipst") werden.

Im Hinblick auf Herstellung und Wirtschaftlichkeit werden heute hauptsächlich Spreizmuffen-umspritzte Verbindungsspreizbolzen mit zwei Muffensegmenten mit schieberlosen Spritzgusswerkzeugen hergestellt.

Es ist die Aufgabe der vorliegenden Erfindung, einen Spreizmuffen-umspritzten Verbindungsspreizbolzen der eingangs genannten Art dahingehend weiterzubilden, dass ein höherer Halt des Verbindungsspreizbolzens in der Bohrung einer Holzfaserplatte bei Zugbelastung erzielt werden kann und der Spreizmuffen-umspritzte Verbindungsspreizbolzen mit schieberlosen Spritzgusswerkzeugen hergestellt werden kann.

Diese Aufgabe wird erfindungsgemäß dadurch gelöst, dass das den Bolzenkonus umgebende Muffenende in mindestens drei Muffensegmente unterteilt ist und dass mindestens zwei der die Muffensegmente voneinander trennenden Schlitze auf dem Bolzenkonus nicht parallel zur Bolzenachse verlaufen.

Der erfindungsgemäße Spreizmuffen-umspritzte Verbindungsspreizbolzen erreicht aufgrund seiner mindestens drei Muffensegmente einen höheren Halt und eine gleichmäßigere Kraftverteilung in der Bohrung der Holzfaserplatte bei Zugbelastung, sowie eine höhere Winkelstabilität und ermöglicht entsprechend höhere Auszugskräfte. Dadurch dass die Schlitze auf dem Bolzenkonus nicht parallel zur Bolzenachse, sondern schräg verlaufen, ist eine kostengünstige Herstellung mit einem schieberlosen Spritzgusswerkzeug möglich.

Vorzugsweise ist das den Bolzenkonus umgebende Muffenende in drei oder vier Muffensegmente unterteilt. Je höher die Anzahl der abspreizbaren Muffensegmente, desto höher sind Halt und Winkelstabilität und desto gleichmäßiger die Kraftverteilung in der Bohrung der Holzfaserplatte bei Zugbelastung.

In einer bevorzugten Ausführungsform der Erfindung ist der Bolzenkonus als Einfachkonus ausgebildet, wobei die Schlitze auf dem Einfachkonus einen bezüglich der Bolzenachse schrägen Schlitzabschnitt aufweisen.

In einer bevorzugten alternativen Ausführungsform der Erfindung ist der Bolzenkonus als Doppelkonus ausgebildet, wobei die Schlitze auf jedem Konus des Doppelkonus einen bezüglich der Bolzenachse schrägen Schlitzabschnitt aufweisen und die beiden schrägen Schlitzabschnitte eines Schlitzes parallelversetzt zueinander verlaufen. Der Doppelkonus bewirkt eine Spreizung der Muffensegmente auf einer größeren Länge als bei einem Einfachkonus, was in einer höheren Haltekraft resultiert.

Der umspritzte Bolzen kann erfindungsgemäß ein Metallbolzen z.B. aus Zinkdruckguss oder Stahl, oder ein Kunststoffbolzen sein. Aber auch andere umspritzbare Materialien sind möglich.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: einen erfindungsgemäßen Spreizmuffen-umspritzten Verbindungsspreizbolzen mit vier Muffensegmenten und einem Einfachkonus zum Abspreizen der Muffensegmente;
- Fig. 2: den in Fig. 1 gezeigten Verbindungsspreizbolzen ohne Spreizmuffe;
- Fig. 3: die in Fig. 1 gezeigte Spreizmuffe;
- Fig. 4: einen erfindungsgemäßen Spreizmuffen-umspritzten Verbindungsspreizbolzen mit vier Muffensegmenten und einem Doppelkonus zum Abspreizen der Muffensegmente;
- Fig. 5: den in Fig. 4 gezeigten Verbindungsspreizbolzen ohne Spreizmuffe; und
- Fig. 6: die in Fig. 4 gezeigte Spreizmuffe.

In der folgenden Figurenbeschreibung werden für gleiche bzw. funktionsgleiche Bauteile identische Bezugszeichen verwendet.

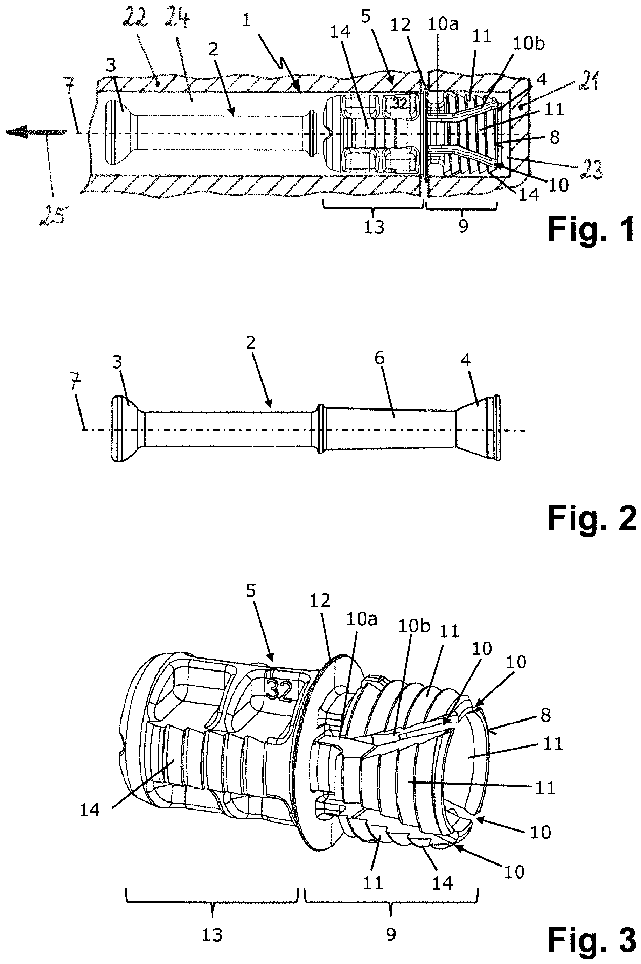

Der in **Fig. 1** gezeigte Spreizmuffen-umspritzte vierflügelige Verbindungsspreizbolzen 1 dient zum Ausbilden einer Eckverbindung zweier Holzfaserplatten **21, 22.**

Der Spreizmuffen-umspritzte Verbindungsspreizbolzen 1 umfasst einen Metall- oder Kunststoffbolzen 2 (**Fig**. **2**) mit einem Bolzenkopf **3** am einen Bolzenende und mit einem sich in Richtung auf den Bolzenkopf 3 verjüngenden Bolzenkonus **4** in Form eines Einfachkonus am anderen Bolzenende sowie eine hülsenförmige Kunststoff-Spreizmuffe **5** (**Fig. 3**). Der Bolzenkonus 4 und ein sich daran anschließender Bolzenschaftabschnitt **6** sind mit der Spreizmuffe 5 umspritzt, wobei der Bolzenkonus 4 mit seinem äußersten Ende über die Muffenstirnseite **8** der Spreizmuffe 5 vorsteht.

Das den Bolzenkonus 4 umgebende, eine Muffenende **9** der Spreizmuffe 5 ist durch vier endseitig offene Schlitze **10** in vier abspreizbare Muffensegmente **11** unterteilt. Die Schlitze 10 sind zur Muffenstirnseite 8 der Spreizmuffe 5 hin offen und erstrecken sich bis zu einem ringförmigen Tiefenanschlag **12** der Spreizmuffe 5, der radial nach außen vorsteht und das abspreizbare Muffenende 9 von dem anderen Muffenende **13** trennt.

Ausgehend vom Tiefenanschlag 12 weisen die Schlitze 10 auf dem Bolzenschaftabschnitt 6 jeweils einen achsparallelen Schlitzabschnitt **10a,** der gerade und parallel zur Bolzenachse **7** verläuft, und auf dem Bolzenkonus 4 einen schrägen Schlitzabschnitt **10b** auf, der gerade, aber zur Bolzenachse 7 nicht parallel verläuft und gegenüber dem achsparallelen Schlitzabschnitt 10a um ca. 20° abgewinkelt ist. Im gezeigten Ausführungsbeispiel ist der schräge Schlitzabschnitt 10b etwa doppelt so lang wie der achsparallele Schlitzabschnitt 10a. Die schrägen Schlitzabschnitte 10b der zwei in Fig. 1 sichtbaren Schlitze 10 sind in Richtung fort voneinander abgewinkelt. Analog sind auch die schrägen Schlitzabschnitte 10b der zwei in Fig. 1 nicht sichtbaren Schlitze 10 ebenfalls in Richtung fort voneinander abgewinkelt.

Im gezeigten Ausführungsbeispiel weisen die beiden Muffenenden 9, 13 auf ihren Außenseiten jeweils mehrere axial hintereinander angeordnete Rippen **14** auf, die auf dem abspreizbaren Muffenende 9 jeweils ringsum (z.B. als Gewindegänge) und auf dem anderen Muffenende 13 nur an zwei einander gegenüberliegenden Seiten vorgesehen sind.

Wie in Fig. 1 gezeigt, ist das abspreizbare Muffenende 9 in eine Sackbohrung **23** der einen, ersten Platte 21 und das andere Muffenende 13 in eine Bohrung **24** der anderen, zweiten Platte 22 eingesteckt, wobei die jeweilige Stecktiefe durch den Tiefenanschlag 12 begrenzt ist. Anschließend wird der Bolzenkopf 3 mittels eines in der zweiten Platte 22 verankerten Anzugselements (nicht gezeigt) in Pfeilrichtung **25** gezogen und dadurch relativ zu der Spreizmuffe 5, die über ihren Tiefenanschlag 12 in Zugrichtung 25 unverschiebbar an der ersten Platte 21 anliegt, verschoben. Die Relativbewegung des Bolzenkonus 4 gegenüber der Spreizmuffe 5 bewirkt eine Abspreizung der Muffensegmente 11 radial nach außen, die sich mit ihren Rippen 14 in die Wandung der Sackbohrung 23, also in den Holzwerkstoff der ersten Platte 21, einprägen. Wenn der Tiefenanschlag 12 vollständig in die Platten 21, 22 eingedrückt ist und die Platten 21, 22 aneinander anliegen, ist der Anzugsvorgang abgeschlossen.

Der in Fig. 1 gezeigte Spreizmuffen-umspritzte Verbindungsspreizbolzen 1 mit Einfachkonus 4 kann statt mit vier Muffensegmenten 11 auch mit nur drei oder mehr Muffensegmenten ausgeführt sein. Im Fall einer ungeraden Anzahl an Muffensegmenten kann einer der Schlitze auf seiner gesamten Länge, also vom Tiefenanschlag 12 bis zur Stirnseite 8, alternativ auch gerade und parallel zur Bolzenachse 7 verlaufen.

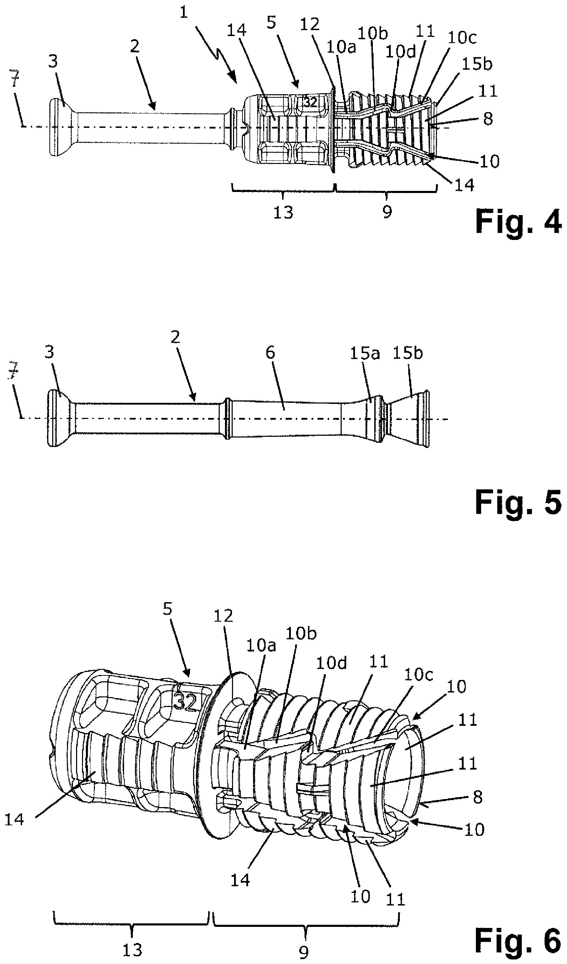

Vom Verbindungsspreizbolzen der Fig. 1 unterscheidet sich der in **Fig. 4** gezeigte vierflügelige Verbindungsspreizbolzen 1 dadurch, dass hier der Bolzenkonus als Doppelkonus **15a, 15b** ausgebildet ist und das abspreizbare Muffenende 9 länger ausgeführt und durch vier zickzackförmige Schlitze 10 in vier Muffensegmente 11 unterteilt ist. Ausgehend vom Tiefenanschlag 12 weisen die Schlitze 10 auf dem Bolzenschaftabschnitt 6 jeweils einen achsparallelen Schlitzabschnitt 10a, der gerade und parallel zur Bolzenachse 7 verläuft, auf dem inneren Konus 15a einen ersten schrägen Schlitzabschnitt 10b, der gerade, aber zur Bolzenachse 7 nicht parallel verläuft und gegenüber dem achsparallelen Schlitzabschnitt 10a um ca. 20° abgewinkelt ist, und auf dem äußeren Konus 15b einen zweiten schrägen Schlitzabschnitt **10c** auf, der durch einen querverlaufenden Schlitzabschnitt **10d** gegenüber dem ersten schrägen Schlitzabschnitt 10b rückversetzt ist und parallel zum ersten schrägen Schlitzabschnitt 10b verläuft. Der querverlaufende Schlitzabschnitt 10d ist gegenüber den beiden schrägen Schlitzabschnitten 10b, 10c jeweils um ca. 90° abgewinkelt Die schrägen Schlitzabschnitte 10b, 10c der zwei in Fig. 4 sichtbaren Schlitze 10 sind in Richtung fort voneinander abgewinkelt. Analog sind auch die schrägen Schlitzabschnitte 10b, 10c der zwei in Fig. 4 nicht sichtbaren Schlitze 10 ebenfalls in Richtung fort voneinander abgewinkelt.

Im eingebauten Zustand bewirkt das Anziehen des Bolzenkopfes 3 eine Relativbewegung des Doppelkonus 15a, 15b gegenüber der Spreizmuffe 5 und dadurch eine jeweils zweifache Abspreizung der Muffensegmente 11 radial nach außen, die sich mit ihren Rippen 14 in die Wandung der Sackbohrung 23, also in den Holzwerkstoff der ersten Platte 21, einprägen.

Der in Fig. 4 gezeigte Verbindungsspreizbolzen 1 mit vier Muffensegmenten 11 und Doppelkonus 15a, 15b zeigt aufgrund der größeren Länge der Muffensegmente 11 eine höhere Haltekraft als der in Fig. 1 gezeigte Verbindungsspreizbolzen 1 mit Einfachkonus 4.

Der in Fig. 4 gezeigte Spreizmuffen-umspritzte Verbindungsspreizbolzen 1 mit Doppelkonus 15a, 15b kann statt mit vier Muffensegmenten 11 auch mit nur drei oder mit mehr Muffensegmenten ausgeführt sein. Im Fall einer ungeraden Anzahl an Muffensegmenten kann einer der Schlitze auf seiner gesamten Länge, also vom Tiefenanschlag 12 bis zur Stirnseite 8, alternativ auch gerade und parallel zur Bolzenachse 7 verlaufen.

## Patentansprüche

1. Spreizmuffen-umspritzter Verbindungsspreizbolzen (1) mit einem Bolzenkopf (3) am einen Bolzenende und einem sich in Richtung auf den Bolzenkopf (3) verjüngenden Bolzenkonus (4; 15a, 15b) am anderen Bolzenende, wobei der Bolzenkonus (4; 15a, 15b) und ein sich daran anschließender Bolzenschaftabschnitt (6) mit einer Kunststoff-Spreizmuffe (5) umspritzt sind, deren den Bolzenkonus (4; 15a, 15b) umgebendes Muffenende (9) durch endseitig offene Schlitze (10) in mehrere abspreizbare Muffensegmente (11) unterteilt ist,
**dadurch gekennzeichnet,**
**dass** das den Bolzenkonus (4; 15a, 15b) umgebende Muffenende (9) in mindestens drei Muffensegmente (11) unterteilt ist und dass mindestens zwei der die Muffensegmente (11) voneinander trennenden Schlitze (10) auf dem Bolzenkonus (4; 15a, 15b) nicht parallel zur Bolzenachse (7) verlaufen.

2. Spreizmuffen-umspritzter Verbindungsspreizbolzen nach Anspruch 1,
**dadurch gekennzeichnet, dass** das den Bolzenkonus umgebende Muffenende (9) in drei Muffensegmente (11) unterteilt ist.

3. Spreizmuffen-umspritzter Verbindungsspreizbolzen nach Anspruch 1,
**dadurch gekennzeichnet, dass** das den Bolzenkonus (4; 15a, 15b) umgebende Muffenende (9) in vier Muffensegmente (11) unterteilt ist.

4. Spreizmuffen-umspritzter Verbindungsspreizbolzen nach einem der vorhergehenden Ansprüche, **dadurch gekennzeichnet, dass** alle Schlitze (10) auf dem Bolzenkonus (4; 15a, 15b) nicht parallel zur Bolzenachse (7) verlaufen.

5. Spreizmuffen-umspritzter Verbindungsspreizbolzen nach einem der vorhergehenden Ansprüche, **dadurch gekennzeichnet, dass** der Bolzenkonus als Einfachkonus (4) ausgebildet ist.

6. Spreizmuffen-umspritzter Verbindungsspreizbolzen nach Anspruch 5, **dadurch gekennzeichnet, dass** die Schlitze (10) auf dem Einfachkonus (4) einen bezüglich der Bolzenachse (7) schrägen Schlitzabschnitt (10b) aufweisen.

7. Spreizmuffen-umspritzter Verbindungsspreizbolzen nach einem der Ansprüche 1 bis 4, **dadurch gekennzeichnet, dass** der Bolzenkonus als Doppelkonus (15a, 15b) ausgebildet ist.

8. Spreizmuffen-umspritzter Verbindungsspreizbolzen nach Anspruch 7, **dadurch gekennzeichnet, dass** die Schlitze (10) auf jedem Konus (15a, 15b) des Doppelkonus einen bezüglich der Bolzenachse (7) schrägen Schlitzabschnitt (10b, 10c) aufweisen und die beiden schrägen Schlitzabschnitte (10b, 10c) eines Schlitzes (10) parallelversetzt zueinander verlaufen.

9. Spreizmuffen-umspritzter Verbindungsspreizbolzen nach einem der vorhergehenden Ansprüche, **dadurch gekennzeichnet, dass** die Schlitze (10) auf dem Bolzenschaftabschnitt (6) einen achsparallelen Schlitzabschnitt (10a) aufweisen.

10. Spreizmuffen-umspritzter Verbindungsspreizbolzen nach einem der vorhergehenden Ansprüche, **dadurch gekennzeichnet, dass** sich die Schlitze (10) von der Muffenstirnseite (8) bis zu einem Tiefenanschlag (12) der Spreizmuffe (5) erstrecken.

11. Spreizmuffen-umspritzter Verbindungsspreizbolzen nach einem der vorhergehenden Ansprüche, **dadurch gekennzeichnet, dass** der Verbindungsspreizbolzen einen Metall- oder Kunststoffbolzen (2) aufweist.

## Claims

1. A connecting expansion bolt (1) over-moulded with an expansion sleeve, comprising a bolt head (3) at one bolt end and a bolt cone (4; 15a, 15b), tapering in the direction of the bolt head (3), at the other bolt end, wherein the bolt cone (4; 15a, 15b) and an adjoining bolt shaft portion (6) are over-moulded with a plastic expansion sleeve (5), the sleeve end (9) of which that surrounds the bolt cone (4; 15a, 15b) is divided into a plurality of spreadable sleeve segments (11) by open-ended slits (10),
**characterized in that**
the sleeve end (9) that surrounds the bolt cone (4; 15a, 15b) is divided into at least three sleeve segments (11), and at least two of the slits (10) that separate the sleeve segments (11) from one another do not extend parallel to the bolt axis (7) on the bolt cone (4; 15a, 15b).

2. The connecting expansion bolt over-moulded with an expansion sleeve as claimed in claim 1, **characterized in that** the sleeve end (9) that surrounds the bolt cone is divided into three sleeve segments (11).

3. The connecting expansion bolt over-moulded with an expansion sleeve as claimed in claim 1, **characterized in that** the sleeve end (9) that surrounds the bolt cone (4; 15a, 15b) is divided into four sleeve segments (11).

4. The connecting expansion bolt over-moulded with an expansion sleeve as claimed in one of the preceding claims, **characterized in that** none of the slits (10) on the bolt cone (4; 15a, 15b) extend parallel to the bolt axis (7).

5. The connecting expansion bolt over-moulded with an expansion sleeve as claimed in one of the preceding claims, **characterized in that** the bolt cone is configured as a single cone (4).

6. The connecting expansion bolt over-moulded with an expansion sleeve as claimed in claim 5, **characterized in that** the slits (10) on the single cone (4) have a slit portion (10b) that is inclined with respect to the bolt axis (7).

7. The connecting expansion bolt over-moulded with an expansion sleeve as claimed in one of claims 1 to 4, **characterized in that** the bolt cone is configured as a double cone (15a, 15b).

8. The connecting expansion bolt over-moulded with an expansion sleeve as claimed in claim 7, **characterized in that** the slits (10) on each cone (15a, 15b) of the double cone have a slit portion (10b, 10c) that is inclined with respect to the bolt axis (7), and the two inclined slit portions (10b, 10c) of a slit (10) extend in an offset manner parallel to one another.

9. The connecting expansion bolt over-moulded with an expansion sleeve as claimed in one of the preceding claims, **characterized in that** the slits (10) on the bolt shaft portion (6) have an axially parallel slit portion (10a).

10. The connecting expansion bolt over-moulded with an expansion sleeve as claimed in one of the preceding claims, **characterized in that** the slits (10) extend from the sleeve end side (8) to a depth stop (12) of the expansion sleeve (5).

11. The connecting expansion bolt over-moulded with an expansion sleeve as claimed in one of the preceding claims, **characterized in that** the connecting expansion bolt has a metal or plastic bolt (2).

## Revendications

1. Broche (1) de liaison par écartement, encapsulée dans un manchon expansible moulé par injection, comprenant une tête (3) à l'une des extrémités et, à l'autre extrémité, un cône (4 ; 15a, 15b) se rétrécissant en direction de ladite tête (3) de la broche, ledit cône (4 ; 15a, 15b) de la broche, et un tronçon attenant (6) de la tige de ladite broche, étant enrobés par un manchon expansible (5) en matière plastique rapporté par injection et dont l'extrémité (9), entourant ledit cône (4 ; 15a, 15b) de la broche, est scindée en plusieurs segments déployables (11) par des fentes (10) ouvertes aux extrémités, **caractérisée par le fait**
**que** l'extrémité (9) du manchon, entourant le cône (4 ; 15a, 15b) de la broche, est scindée en au moins trois segments (11) dudit manchon ; et par le fait qu'au moins deux, parmi les fentes (10) séparant les uns des autres lesdits segments (11) du manchon, ne s'étendent pas parallèlement à l'axe (7) de la broche sur le cône (4 ; 15a, 15b) de ladite broche.

2. Broche de liaison par écartement selon la revendication 1, encapsulée dans un manchon expansible moulé par injection et **caractérisée par le fait que** l'extrémité (9) du manchon, entourant le cône de ladite broche, est scindée en trois segments (11) dudit manchon.

3. Broche de liaison par écartement selon la revendication 1, encapsulée dans un manchon expansible moulé par injection et **caractérisée par le fait que** l'extrémité (9) du manchon, entourant le cône (4 ; 15a, 15b) de la broche, est scindée en quatre segments (11) dudit manchon.

4. Broche de liaison par écartement selon l'une des revendications précédentes, encapsulée dans un manchon expansible moulé par injection et **caractérisée par le fait que** l'intégralité des fentes (10) ne s'étend pas parallèlement à l'axe (7) de la broche sur le cône (4 ; 15a, 15b) de ladite broche.

5. Broche de liaison par écartement selon l'une des revendications précédentes, encapsulée dans un manchon expansible moulé par injection et **caractérisée par le fait que** le cône de ladite broche est réalisé sous la forme d'un cône simple (4).

6. Broche de liaison par écartement selon la revendication 5, encapsulée dans un manchon expansible moulé par injection et **caractérisée par le fait que** les fentes (10) sont pourvues, sur le cône simple (4), d'une région (10b) inclinée par rapport à l'axe (7) de ladite broche.

7. Broche de liaison par écartement selon l'une des revendications 1 à 4, encapsulée dans un manchon expansible moulé par injection et **caractérisée par le fait que** le cône de ladite broche est réalisé sous la forme d'un cône double (15a, 15b).

8. Broche de liaison par écartement selon la revendication 7, encapsulée dans un manchon expansible moulé par injection et **caractérisée par le fait que** les fentes (10) sont munies, sur chaque cône (15a, 15b) du cône double, d'une région (10b, 10c) inclinée par rapport à l'axe (7) de ladite broche, et les deux régions inclinées (10a, 10b) d'une fente (10) s'étendent parallèlement avec décalage l'une par rapport à l'autre.

9. Broche de liaison par écartement selon l'une des revendications précédentes, encapsulée dans un manchon expansible moulé par injection et **caractérisée par le fait que** les fentes (10) sont dotées d'une région (10a) parallèle à l'axe sur le tronçon (6) de la tige de ladite broche.

10. Broche de liaison par écartement selon l'une des revendications précédentes, encapsulée dans un manchon expansible moulé par injection et **caractérisée par le fait que** les fentes (10) s'étendent depuis la face extrême (8) du manchon jusqu'à une butée de profondeur (12) dudit manchon expansible (5).

11. Broche de liaison par écartement selon l'une des revendications précédentes, encapsulée dans un manchon expansible moulé par injection et **caractérisée par le fait que** ladite broche de liaison par écartement présente un fût (3) en métal ou en matière plastique.
